# EUROPÄISCHE PATENTSCHRIFT

(11) **EP 1 789 370 B1**
(45) Veröffentlichungstag und Bekanntmachung des Hinweises auf die Patenterteilung: **15.01.2014**
(21) Anmeldenummer: 05781997.1
(22) Anmeldetag: 23.08.2005
(51) Int. Cl.: C03C 17/02, C03C 17/25, C03B 19/02

(54) **BESCHICHTETES BAUTEIL AUS QUARZGLAS SOWIE VERFAHREN ZUR HERSTELLUNG DES BAUTEILS**
COATED COMPONENT CONSISTING OF QUARTZ GLASS, AND METHOD FOR PRODUCING SAID COMPONENT
COMPOSANT EN VERRE DE SILICE REVETU ET SON PROCEDE DE PRODUCTION

(30) Priorität: 23.08.2004 DE 102004040833; 28.10.2004 DE 102004052312
(43) Veröffentlichungstag der Anmeldung: 30.05.2007
(60) Teilanmeldung: 10182969.5
(73) Patentinhaber: Heraeus Quarzglas GmbH & Co. KG, 63450 Hanau (DE)
(72) Erfinder: KIRST, Ulrich, 55115 Mainz (DE); STANG, Wolfgang, 63699 Kefenrod (DE); WEBER, Jürgen, 63801 Kleinostheim (DE); WERDECKER, Waltraud, 63456 Hanau (DE); TROMMER, Martin, 36381 Schlüchtern (DE); BECKER, Jörg, 61194 Niddatal (DE)
(74) Vertreter: Staudt, Armin Walter
(86) Internationale Anmeldenummer: PCT/EP2005/009073
(87) Internationale Veröffentlichungsnummer: WO 2006/021415

(56) Entgegenhaltungen:
- EP-A- 0 366 090
- EP-A- 0 367 269
- WO-A-01/46079
- DE-A1- 4 440 104
- DE-B3- 10 243 954
- US-A- 5 766 680

## Beschreibung

Die Erfindung betrifft ein Quarzglas-Bauteil, umfassend einen Basiskörper aus Quarzglas, dessen Oberfläche mindestens teilweise mit einer Glasmasse belegt ist, die sich in ihren optischen, physikalischen oder chemischen Eigenschaften vom Quarzglas des Basiskörpers unterscheidet.

Außerdem geht es in der Erfindung um ein Verfahren zur Herstellung eines beschichteten Bauteils aus Quarzglas, indem die Oberfläche eines Basiskörpers aus Quarzglas mindestens teilweise mit einer SiO₂-Glasmasse belegt wird, die sich in ihren optischen, physikalischen oder chemischen Eigenschaften vom Quarzglas des Basiskörpers unterscheidet.

Quarzglas zeichnet sich durch einen niedrigen Ausdehnungskoeffizienten, durch optische Transparenz über einen weiten Wellenlängenbereich und durch hohe chemische und thermische Beständigkeit aus. Bauteile aus Quarzglas werden für eine Vielzahl von Anwendungen eingesetzt, wie beispielsweise in der Lampenfertigung als Hüllrohre, Kolben, Abdeckplatten oder Reflektorträger für Lampen und Strahler im ultravioletten, infraroten und sichtbaren Spektralbereich, oder in der Halbleiterfertigung in Form von Reaktoren und Apparaturen aus Quarzglas für die Behandlung von Halbleiterbauteilen, Trägerhorden, Glocken, Tiegeln, Schutzschilden oder einfachen Quarzglas-Bauteilen, wie Rohre, Stäbe, Platten, Flansche, Ringe oder Blöcke. Zum Erzeugen besonderer Eigenschaften wird Quarzglas mit anderen Substanzen dotiert.

Insbesondere bei Anwendungen in der Halbleiterfertigung werden die Quarzglas-Bauteile hohen thermischen Belastungen und chemisch aggressiven Umgebungen ausgesetzt. Bei diesen Anwendungen spielen eine guten Wärmeisolierung, eine hohe Temperaturstabilität oder Temperaturwechselbeständigkeit sowie eine hohe chemische Beständigkeit und Kontaminationsfreiheit eine wichtige Rolle. Zunehmend höhere Anforderungen werden an die Standzeit derartiger Quarzglas-Bauteile gestellt.

In Bezug auf die Standzeit von Quarzglas-Bauteilen sind die Ätzresistenz und die Blasenfreiheit oberflächennaher Bereiche zu beachten. Beispielsweise führen zunächst geschlossene Blasen in Quarzglas-Reaktoren von Halbleiter-Ätzanlagen, die im Verlaufe des Einsatzes durch Materialabtrag geöffnet werden, häufig zu Verunreinigungen der im Reaktor zu behandelnden Halbleiter und beenden damit die Lebensdauer des Quarzglasreaktors. Auch mit Quarzglas reagierende, fluor-haltige Prozessgase, wie etwa CHF₃ oder CF₄, können durch Ätzabtrag die Lebensdauer eines Quarzglas-Bauteils verkürzen.

Außerdem tritt bei Halbleiterfertigungsprozessen, wie etwa bei Sputter- oder Aufdampfprozessen, häufig das Problem auf, dass sich Materialschichten auf allen Oberflächen innerhalb des Reaktors, und insbesondere auch auf den Quarzglasoberflächen, niederschlagen. Die Materialschichten können sich mit der ablösen und führen dann zu Partikelproblemen. Um dies zu vermeiden, werden die entsprechenden Quarzglasoberflächen von Zeit zu Zeit gereinigt, was üblicherweise durch ein Ätzen mit einem fluorhaltigen Medium, insbesondere mittels Flusssäure, erfolgt. Der Reinigungsprozess ist nicht nur zeit- und kostenaufwändig, sondern führt auch zu einem Abtrag von Quarzglas und einer allmählichen Verringerung der Wandstärke der Quarzglas-Bauteile. Auch dadurch wird die Lebensdauer der betreffenden Bauteile begrenzt. Es ist bekannt, dass derartige Materialschichten an rauhen Oberflächen besser haften, und dadurch die Frequenz der erforderlichen Reinigungszyklen verringert und damit die Lebensdauer der - meist sehr teueren - Quarzglas-Bauteile verlängert werden kann. Die erforderliche Oberflächenrauigkeit wird durch mechanische Abtragverfahren erzeugt, wie etwa durch Schleifen oder Sandstrahlen, oder mittels spezieller Ätzlösungen. Beide Verfahren haben Nachteile. So werden bei der mechanischen Bearbeitung der Oberfläche Risse erzeugt, die wiederum zu Partikelproblemen führen.

Zur Vermeidung von Kontaminationen bietet es sich besonders in der Halbleiterfertigung an, Quarzglas-Bauteile aus synthetischem Quarzglas einzusetzen, die jedoch teuer sind. Eine demgegenüber kostengünstigere Alternative ist in der DE 698 06 628 T2 beschrieben, aus der auch ein Quarzglas-Bauteil für die Halbleiterfertigung und ein Verfahren gemäß der eingangs genannten Gattung bekannt sind. Darin wird vorgeschlagen, auf einem in einem separaten Verfahrensschritt vorab erzeugten Quarzglas-Bauteil aus natürlichem Rohstoff eine Schicht aus synthetischem Quarzglas zu erzeugen. Hierzu werden durch Flammenhydrolyse einer siliciumhaltigen Ausgangsverbindung in einem Abscheidebrenner SiO₂-Partikel erzeugt und diese auf der Oberfläche des Bauteils abgeschieden und dort unter Bildung einer transparenten, blasenfreien, dichten und glatten Oberflächenschicht aus synthetischem Quarzglas sofort verglast.

Die Ausbildung der Oberflächenschicht erfolgt durch eine relative Bewegung des Abscheidebrenners und der zu beschichtenden Bauteil-Oberfläche zueinander, wobei das Schichtwachstum von der aktuellen Abscheiderate und der Anzahl der Schichtlagen abhängt.

Die Herstellung von Oberflächenschichten durch ein derartiges Abscheideverfahren - insbesondere die reproduzierbare Herstellung gleichmäßiger Schichtdicken - ist langwierig und erfordert einen hohen apparativen und zeitlichen Aufwand.

Ein weiteres Verfahren zum Erzeugen einer glatten, transparenten Oberflächenschicht auf einem porösen, mittels Schlickergießverfahren hergestelltem Grünkörper wird in der DE 44 40 104 C2 beschrieben. Dabei wird eine wässrige Suspension von SiO₂-Teilchen mit einer chemischen Reinheit von 99,9 % SiO₂ erzeugt und in eine Gipsform gegossen. Die Oberfläche des resultierenden, porösen Grünkörpers wird anschließend mittels einer Knallgasflamme lokal auf hohe Temperaturen im Bereich von 1650 °C bis 2200 °C erhitzt, so dass sich das opake, poröse Grundmaterial in einem oberflächennahen Bereich mit einer Stärke von ca. 0,5 mm in transparentes Quarzglas umwandelt (= Verglasung).

Es hat sich jedoch gezeigt, dass mittels des bekannten Verfahrens verglaste Schichtdicken von mehr als 2 mm nicht zu erreichen sind. Offensichtlich wirkt die verglaste, transparente Oberflächenschicht als Wärmeisolator, der ein ausreichendes Erhitzen der darunter liegenden Schichten erschwert. Dieses Problem ist durch höhere Flammentemperaturen nicht zu lösen, da diese zu einer plastischen Verformung des Bauteils und zum Abdampfen von gasförmigem Siliciummonoxid (SiO) führen.

Der Erfindung liegt die Aufgabe zugrunde, ein kostengünstiges Bauteil aus Quarzglas, insbesondere für den Einsatz in der Halbleiterfertigung, bereitzustellen, das sich durch hohe Reinheit, durch hohe Ätzresistenz (und damit eine lange Standzeit) auszeichnet, und das möglichst keine Partikelprobleme erzeugt.

Weiterhin liegt der Erfindung die Aufgabe zugrunde, ein Verfahren zur Herstellung einer SiO₂-Glasmasse auf einem Quarzglas-Bauteil anzugeben, die vergleichsweise kostengünstig und reproduzierbar und in beliebiger Stärke und Form hergestellt werden kann, und die je nach ihrer konkreten Ausgestaltung unterschiedliche Funktionen erfüllen kann, insbesondere in der Halbleiterfertigung.

Hinsichtlich des Verfahrens wird diese Aufgabe ausgehend von dem eingangs genannten Verfahren erfindungsgemäß dadurch gelöst, dass ein amorphe SiO₂-Teilchen enthaltender Schlicker erzeugt und auf der Oberfläche des Basiskörpers unter Bildung einer Schlicker-Schicht aufgebracht wird, die Schlicker-Schicht getrocknet und anschließend unter Bildung der SiO₂-Glasmasse verglast wird.

Beim erfindungsgemäßen Verfahren erfolgt die Herstellung der Beschichtung des Quarzglas-Basiskörpers über eine Schlicker-Route eingesetzt. Das Volumen der SiO₂-Glasmasse wird vollständig - oder zumindest zu einem wesentlichen Teil von SiO₂ gebildet, welches über ein Schlickerverfahren aufbereitet und bereitgestellt wird. Eine besondere technische Herausforderung besteht darin, ein Reißen der Schlicker-Schicht beim Trocknen oder Verglasen zu vermeiden, obwohl das Volumen der Schicht schrumpft, ohne dass das Quarzglas des Basiskörpers entsprechend nachgeben kann.

Hierzu wird zunächst ein wässriger, homogener, stabiler und gießfähiger Schlicker erzeugt, der amorphe SiO₂-Teilchen enthält. Der Schlicker wird als "Schlicker-Schicht" auf dem Basiskörper aufgetragen und anschließend getrocknet und verglast. Infolge von Wechselwirkungen untereinander stabilisieren die amorphen SiO₂-Teilchen bereits die Schlicker-Schicht im pastösen und trockenen Zustand und sie fördern die Sinteraktivität, was das Sintern der getrockneten Schlicker-Schicht bei vergleichsweise niedriger Temperatur unter Ausbildung einer dichten, rissfreien SiO₂-Glasmasse ermöglicht.

Die SiO₂-Teilchen bestehen aus synthetisch hergestelltem SiO₂ oder aus gereinigtem natürlich vorkommendem Rohstoff, wie er in der oben erwähnten DE 44 40 104 C2 beschrieben ist.

Die Teilchengröße und -verteilung der SiO₂-Teilchen hat Auswirkungen auf die rheologischen Eigenschafen des Schlickers, auf Trockenschwindung der Schlicker-Schicht und auf die Oberflächenrauigkeit der daraus erhaltenen SiO₂-Glasmasse. So kann durch Einsatz gröberer SiO₂-Teilchen die Strukturviskosität erhöht, die Trockenschwindung verringert und die Oberflächenrauigkeit der SiO₂-Glasmasse vergrößert werden.

Das Trocknen der Schlicker-Schicht erfolgt durch Entzug von Feuchtigkeit bei Raumtemperatur, durch Erwärmen oder durch Gefriertrocknen. Nach dem Trocknen wird die Schlicker-Schicht verglast, indem sie auf eine hohe Temperatur erhitzt wird, die zu einem Sintern der SiO₂-Teilchen und zur Ausbildung einer dichten, rissfreien Glasmasse aus opakem, teils opakem und teils transparentem oder vollständig transparentem SiO₂ führt, und die die gesamte Oberfläche des Basiskörpers oder einen Teil davon bedeckt. Die SiO₂-Glasmasse ist in Form einer ebenen Schicht ausgeführt oder sie bildet eine Form, die einen funktionellen Bestandteil des Bauteils ausmacht, beispielsweise als Verdickung oder Wulst.

Bei dem Basiskörper handelt es sich um einen Körper aus Quarzglas, das aus synthetisch hergestellten oder aus natürlich vorkommenden Rohstoffen erzeugt ist. Das Quarzglas des Basiskörpers kann transparent oder opak (transluzent) sein.

Vorzugsweise werden für die Bildung der Glasmasse SiO₂-Teilchen eingesetzt, die Teilchengröße im Bereich bis maximal 500 µm, vorzugsweise maximal 100 µm, aufweisen, wobei SiO₂-Teilchen mit Teilchengrößen im Bereich zwischen 1 µm und 50 µm den größten Volumenanteil ausmachen.

SiO₂-Teilchen in diesem Größenbereich zeigen ein vorteilhaftes Sinterverhalten und eine vergleichsweise geringe Trockenschwindung. Es hat sich gezeigt, dass bei einem derartigen Schlicker die Schlicker-Schicht besonders einfach ohne Rissbildung getrocknet und verglast werden kann. Das kann auf eine ausreichend geringe Trockenschwindung und auf Wechselwirkungen der SiO₂-Teilchen untereinander beruhen, die bis zur Ausbildung molekularer SiO₂-Bindungen führen können, und die das Trocknen und Sintern erleichtern.

Dazu tragen die polare Natur der wässrigen Phase des Schlickers sowie eine Verfahrensweise bei, ei welcher die SiO₂-Teilchen durch Nassmahlen von SiO₂-Ausgangskörnung hergestellt werden.

Hierbei wird die gewünschte Teilchengrößenverteilung durch den Homogenisierungsprozess des wässrigen Schlickers eingestellt, wobei die SiO₂-Teilchen ausgehend von vergleichsweise groben Körnern mit Durchmessern zum Beispiel im Bereich zwischen 200 µm und 5000 µm beim Homogenisieren in Abhängigkeit von deren Verfestigungsgrad verkleinert werden. Beim Nassmahlen entstehen innerhalb des Schlickers SiO₂-Teilchen jeder Größe, auch solche, die durch Wechselwirkungen untereinander bereits im Schlicker die oben beschriebenen und Bindungen ausbilden, was die Stabilität der Schlicker-Schicht verbessert.

Der Cristobalitanteil in der getrockneten SiO₂-Schlickerschicht sollte höchstens 1 Gew.-% betragen, da es andernfalls beim Verglasen der Schlicker-Schicht zu einer Kristallisation kommen kann, was zum Ausschuss des Bauteils führen kann.

Ein Aufrauhen der Oberfläche des Basiskörpers bewirkt eine bessere Haftung sowohl der Schlicker-Schicht als auch der durch Verglasen daraus erzeugten dichten SiO₂-Glasmasse. Das Aufrauhen erfolgt mechanisch (zum Beispiel durch Schleifen oder Sandstrahlen) oder chemisch (durch Ätzen), wobei die Oberfläche eine mittleren Rauhtiefe Rₐ von mindestens 0,5 µm aufweisen sollte.

Zum Auftragen des Schlickers sind die an sich bekannten Verfahrenstechniken geeignet, wie beispielsweise Sprühen, elektrostatisch unterstütztes Sprühen, Fluten, Schleudern, Tauchen, Drucken, Ausziehen und Abstreifen (Doctorblade-Verfahren) oder Aufstreichen.

Auch durch eine geeignete Temperaturführung kann die Gefahr einer Rissbildung beim Verglasen vermindert werden. Bevorzugt erfolgt das Verglasen der getrockneten Schlicker-Schicht bei einer im Vergleich zum eingangs beschriebenen Verfahren niedrigen Maximaltemperatur im Bereich zwischen 1000 °C und 1600 °C, vorzugsweise zwischen 1100 °C und 1400 °C.

Die niedrige Maximaltemperatur verhindert ein zu rasches Verdichten der äußeren Oberflächenbereiche der Schlicker-Schicht beim Verglasen. Eine derartige rasche Verdichtung würde infolge ihrer wärmeisolierenden Wirkung das weitere Fortschreiten einer Verglasungsfront behindern, und dadurch das vollständige Verglasen oder die Bildung dicker verglaster Schichten erschweren.

In einer besonders bevorzugten Verfahrensvariante erfolgt das Verglasen der getrockneten Schlicker-Schicht in einer Wasserstoffatmosphäre.

Wegen seiner hohen Diffusionsrate in Quarzglas ist Wasserstoff für eine Wärmeübertragung besonders geeignet. Durch einen guten Wärmetransport wird erreicht, dass sich zwischen der an der Oberfläche herrschenden hohen Temperatur und der niedrigeren Temperatur im Inneren der SiO₂-Glasmasse bzw. dem noch nicht verglasten Bereich der porösen, getrockneten Schlicker-Schicht ein möglichst flacher Temperaturgradient ausbildet. Dadurch wird auch bei niedrigen Verglasungstemperaturen noch ein Fortschreiten der Schmelzfront von Außen nach Innen und damit ein Verglasen auch innerer Bereiche der Schlicker-Schicht gewährleistet. Ein Wasserstoffgehalt von mindestens 70% ist hierfür ausreichend. Diese Verfahrensvariante erleichtert daher insbesondere die Ausbildung vollständig transparenter SiO₂-Glasmasseen mit Schichtstärken bis in den Bereich mehrerer Millimeter. Außer Wasserstoff kann die Atmosphären beim Verglasen beispielsweise auch Stickstoff und vorzugsweise Helium enthalten

Im Hinblick auf notwendige Sicherheitsvorkehrungen ist ein Verglasungsprozess unter Wasserstoff jedoch verhältnismäßig aufwändig. Für Anwendungen, bei denen eine opake oder weniger dicke, transparente SiO₂-Glasmasse ausreicht, kann das Verglasen der getrockneten Schlicker-Schicht unter Luft erfolgen. Ein Verglasen an Luft führt in der Regel zu opaken SiO₂-Glasmassen. Es hat sich aber gezeigt, dass sich auch Schlicker-Schichten an Luft zu einer transparenten Schicht bis zu Schichtdicken von etwa 4 mm verglasen lassen, sofern der Basiskörper selbst aus transparentem Quarzglas besteht. Das Verglasen an Luft erfordert keine besonderen Sicherheitsvorkehrungen und ist kostengünstig.

Alternativ zum Verglasen in einem Ofen hat es sich auch bewährt, wenn das Verglasen der getrockneten Schlicker-Schicht mittels einer Brennerflamme erfolgt.

Diese Verfahrensvariante ergibt eine ebenfalls rissfreie, flammenpolierte Oberfläche, wobei die Hitzeeinwirkung zeitlich kurz ist und leicht auf die Bereiche beschränkt werden kann, die mit einer zu verglasenden SiO₂-Schlickerschicht belegt sind, so dass plastische Verformungen weitgehend vermieden werden können.

Der gleiche vorteilhafte Effekt ergibt sich durch ein Verglasen mittels Laser (beispielsweise CO₂-Laser).

Überraschenderweise zeigt eine mittels Laser verglaste Oberfläche im Vergleich zu einer mittels Brennerflamme verglasten Oberfläche relativ wenige Blasen. Dies ist dadurch zu erklären, dass die üblichen Brennergase, wie Sauerstoff und Wasserstoff, die zu Bildung und Einschluss von Wasser oder von Hydroxylgruppen im Quarzglas führen, beim "Laserverglasen" nicht oder in geringerer Menge zugegen sind. Dadurch ergibt sich ein deutliche Verbesserung der Ätzbeständigkeit des Bauteils bei gleichzeitig geringer Partikelgenerierung.

Sofern eine besonders große Dicke der SiO₂-Glasmasse erforderlich ist, kann die Schicht durch mehrmaliges Durchführen des erfindungsgemäßen Verfahrens sukzessive verstärkt werden. Diese Verfahrensvariante kommt beispielsweise vorteilhaft zur Anwendung, wenn die SiO₂-Glasmasse als bereichsweise Verdickung des Basiskörpers ausgebildet wird.

Die bereichsweise Verdickung des Basiskörpers kann eine Vielzahl von Funktionen erfüllen. Beispielsweise kann sie bei einem zylinderförmigen Basiskörper als umlaufender Wulst zur Halterung oder zur Abdichtung bei Anlage an einem Gegenstück dienen, oder als endständige Verdickung eines stab- oder rohrförmigen Basiskörpers ausgebildet sein, aus der eine vorgegebene Endform mechanisch gearbeitet wird, wie beispielsweise ein Kugelschliffteil oder ein Flansch.

Es hat sich außerdem bewährt, dem Schlicker Dotierstoffe in Form von Yttrium, Aluminium, Stickstoff, Kohlenstoff oder deren Verbindungen hinzugefügt werden.

Bei dieser Verfahrensvariante werden in die SiO₂-Glasmasse ein Dotierstoff oder mehrere Dotierstoffe eingebracht, die in Quarzglas eine spezifische Wirkung entfalten, wie etwa eine färbende Wirkung oder eine die Gasstruktur versteifende Wirkung. So bildet beispielsweise ein Zusatz von Aluminium im Quarzglas der Glasmasse Al₂O₃, welches die Ätzresistenz von Quarzglas erhöht und damit zu einer Verlängerung der Lebensdauer des Quarzglas-Bauteils führt. Ähnlich wirken Zusätze von Stickstoff oder Kohlenstoff, welche in Form von Nitriden oder Carbiden in die Quarzglasstruktur eingebaut werden, und die eine Versteifung der Glasstruktur und damit ebenfalls zu einer besseren Ätzresistenz bewirken. Geeignete Ausgangssubstanzen, beispielsweise Silazane oder Siloxane, werden im Schlicker besonders gleichmäßig verteilt, woraus letztlich eine homogene Dotierung des Quarzglases der Glasmasse resultiert. Eine besonders vorteilhafte Wirkung hinsichtlich der Trockenätzbeständigkeit des Bauteils wird durch einen Zusatz an Yttrium erreicht, das im Quarzglas als Y₂O₃ vorliegt.

Die auf diese Art und Weise erzeugte SiO₂-Glasmasse zeichnet sich durch hohe Haftfestigkeit auf Quarzglas aus und ist in ihren Eigenschaften durch einfache Verfahrensänderungen- etwa der Verglasungstemperatur oder der Zugabe von Dotierstoffen leicht modifizierbar und an eine Vielzahl konkreter Anwendungen anpassbar. Geeignete Ausführungen für den Einsatz in der Halbleiterfertigung werden weiter unten näher beschrieben.

Hinsichtlich der Quarzglas-Bauteils wird die oben genannte Aufgabe ausgehend von dem eingangs beschriebenen Quarzglas-Bauteil erfindungsgemäß dadurch gelöst, dass die Glasmasse aus einer amorphe SiO₂-Teilchen enthaltenden, getrockneten, verglasten Schlickermasse erzeugt ist.

Eine derartige SiO₂-Glasmasse wird durch Auftragen einer Masse eines SiO₂-Teilchen enthaltenden Schlickers auf der Oberfläche des Basiskörpers, und durch anschließendes Trocknen und Verglasen der Masse erhalten, wie dies oben für das erfindungsgemäße Verfahren näher erläutert ist. Die SiO₂-Glasmasse besteht vollständig oder zum größten Teil aus SiO₂, welches mittels Schlickerverfahren aufbereitet und aufgetragen wurde, und sie bedeckt die Bauteil-Oberfläche vollständig oder nur zum Teil. Sie bildet eine ebene Schicht auf der Bauteil-Oberfläche oder sie trägt zur geometrischen Form des Bauteils bei und bildet dabei einen funktionellen Bestandteil des Bauteils, beispielsweise eine Verdickung oder einen Wulst, der beispielsweise als Flansch oder Schliffteil dienen kann. Sofern eine glatte und dichte Oberfläche erforderlich ist, wird diese vorzugsweise durch Feuerpolitur erhalten.

Die Oberfläche der so erzeugten SiO₂-Glasmasse wird werkzeugfrei im Schmelzfluss durch Verglasen mittels einer Brennerflamme oder in einem Ofen erhalten und zeichnet sich zumindest durch Rissfreiheit aus und sie ist chemisch und mechanisch bearbeitbar, etwa durch Schleifen, Polieren oder Strahlen.

Vorzugsweise ist die SiO₂-Glasmasse jedoch mit einer rissfrei und werkzeugfrei geformten Oberfläche mit einer mittleren Oberflächenrauigkeit Rₐ von mindestens 0,5 µm ausgebildet.

Die Oberfläche der SiO₂-Glasmasse ist nach dem Verglasen nicht besonders glatt, sondern im Gegenteil, sie ist vielmehr durch eine gewisse Oberflächenrauigkeit gekennzeichnet. Die Oberflächenrauigkeit ergibt sich infolge ihrer Herstellung mittels des erfindungsgemäßen Verfahrens durch den Einsatz eines SiO₂-Teilchen enthaltenden Schlickers für die Bildung der Glasmasse. Je nach Größe und Größenverteilung der im Schlicker enthaltenen amorphen SiO₂-Teilchen stellt sich nach dem Verglasen eine Rauigkeit der Oberfläche automatisch ein, ohne dass hierfür weitere Maßnahmen, wie etwa ein aufrauhendes Ätzen oder eine mechanisch aufrauhende Oberflächenbearbeitung erforderlich sind.

Die "natürliche" Rauigkeit der Oberfläche des erfindungsgemäßen Bauteils prädestiniert es zum Einsatz in der Halbleiterfertigung. Denn sie bewirkt eine bessere Haftung von Materialschichten und führt damit zu einer geringeren Partikelbelastung beim Einsatz des Bauteils bei der Halbleiterfertigung. Außerdem erlaubt das Bauteil eine Verlängerung der Reinigungszyklen und zeigt damit einhergehend eine höhere Lebensdauer.

Die Definition der Oberflächenrauigkeit Rₐ ergibt sich aus der EN ISO 4287, die Messbedingungen aus EN ISO 4288 (es liegt hier der Fall eines nicht periodischen Oberflächenprofils vor). Die mittlere Oberflächenrauigkeit Rₐ der SiO₂-Glasmasse beträgt mindestens 0,5 µm, vorzugsweise mindestens 1,0 µm.

Es hat sich als vorteilhaft erwiesen, wenn die SiO₂-Glasmasse in Bezug auf den Basiskörper aus arteigenem Material besteht.

Unter einem "arteigenen Material" wird hier verstanden, dass sich die SiO₂-Gehalte von Glasmasse und Basiskörpers um maximal 3 Gew.-% voneinander unterscheiden, und dass bei Anwesenheit von Dotierstoffen in der Glasmasse oder im Quarzglas des Basiskörpers diese den Ausdehnungskoeffizienten beiderseits in ähnlicher Weise beeinflussen. Dadurch wird eine besonders gute Haftung der Glasmasse auf dem Basiskörper, und insbesondere eine hohe Temperaturwechselbeständigkeit dieses Verbundes erreicht.

Die SiO₂-Glasmasse kann opak, teilweise opak und transparent oder vollständig transparent ausgebildet sein.

Die vollständige Transparenz der SiO₂-Glasmasse ist bevorzugt, wenn es auf eine hohe Dichte, Porenfreiheit und gute Ätzresistenz ankommt.

Eine Ausführungsform des erfindungsgemäßen Quarzglas-Bauteils mit opaker oder mindestens teilweise opaker SiO₂-Glasmasse wird hingegen bevorzugt, wenn die SiO₂-Glasmasse als Wärmesperre dienen soll. Eine opake SiO₂-Glasmasse ist in der Regel weiß, reflektiert Infrarotstrahlung und hat daher eine gute wärmeisolierende Wirkung.

Bei einer weiteren bevorzugten Ausführungsform des erfindungsgemäßen Bauteils bildet die SiO₂-Glasmasse einen verdickten Bereich des Basiskörpers.

Der verdickte Bereich ist beispielsweise als Wulst oder endständiger Bereich eines zylinderförmigen Basiskörpers ausgebildet. Ihm kommt in der unmittelbar erzeugten Form oder nach einer Nachbearbeitung eine vorgegebene Funktion, beispielsweise zur Halterung des Bauteils, zu.

Je nach Einsatzzweck des Quarzglas-Bauteils ist es vorteilhaft, wenn die SiO₂-Glasmasse Dotierstoffe in Form von Yttrium, Aluminium, Stickstoff, Kohlenstoff oder deren Verbindungen enthält. Auf die diesbezüglichen obigen Erläuterungen zum erfindungsgemäßen Verfahren wird hingewiesen.

Nachfolgend wird die Erfindung anhand von Ausführungsbeispielen und einer Zeichnung näher erläutert. In der Zeichnung zeigen im Einzelnen
- **Figur 1**: ein Fließdiagramm zur Erläuterung einer Verfahrensweise zur Herstellung eines mit einer SiO₂-Glasmasse versehenen Quarzglas-Bauteils zum Einsatz in der Halbleiterfertigung anhand des erfindungsgemäßen Verfahrens,
- **Figur 2**: ein Heizprofil zum Verglasen einer Schlicker-Schicht auf einem Quarzglas-Basiskörper und zum Sintern eines Grünkörpers gemäß der Erfindung,
- **Figur 3**: einen Quarzglas-Flansch für einen Single-Wafer-Halter, dessen Oberfläche vollständig von einer transparenten SiO₂-Glasmasse gebildet wird, in schematischer Darstellung im Schnitt, und
- **Figur 4**: ein Halbzeug zur Herstellung eines Kugelschliffes in schematischer Darstellung.

### 1. Herstellen einer Schlicker-Schicht auf einem Quarzglas-Basiskörper

### Beispiel 1

Es wird ein homogener Grundschlicker hergestellt. Für einen Ansatz von 10 kg Grundschlicker (SiO₂-Wasser-Schlicker) werden in einer mit Quarzglas ausgekleideten Trommelmühle mit ca. 20 Liter Volumeninhalt, 8,2 kg einer amorphen Quarzglaskörnung aus natürlichem Rohstoff mit Korngrößen im Bereich zwischen 250 µm und 650 µm mit 1,8 kg deionisiertem Wasser mit einer Leitfähigkeit von weniger als 3 µS vermischt. Die Quarzglaskörnung wurde vorab in einem Heißchlorierverfahren gereinigt; es wird darauf geachtet, dass der Cristobalitgehalt unter 1 Gew.-% liegt.

Diese Mischung wird mittels Mahlkugeln aus Quarzglas auf einem Rollenbock bei 23 U/min während einer Dauer von 3 Tagen soweit vermahlen, dass sich ein homogener Grundschlicker mit einem Feststoffgehalt von 79 %. Im Verlauf des Vermahlens kommt es infolge des in Lösung gehenden SiO₂ zu einer Absenkung des pH-Werts auf etwa 4.

Dem so erhaltenen homogenen Grundschlicker wird weitere amorphe SiO₂-Körnung mit einer Korngröße um 5 µm zugemischt, bis ein Feststoffgehalt von 84 Gew.-% erreicht ist. Die Mischung wird 12 Stunden lang in einer Trommelmühle bei einer Drehzahl von 25 U/min homogenisiert. Der so erhaltene Schlicker hat einen Feststoffgehalt von 84 % und eine Dichte von 2,0 g/cm³. Die nach dem Vermahlen der Quarzglaskörnung erhaltenen SiO₂-Teilchen im Schlicker 14 zeigen eine Teilchengrößenverteilung, die durch einen D₅₀- Wert von etwa 8 µm und durch einen D₉₀-Wert von etwa 40 µm gekennzeichnet ist.

In den Schlicker wird einige Sekunden lang ein ringförmiger Quarzglas-Flansch mit einem Außendurchmesser von 300 mm für einen Single-Wafer-Halter eingetaucht, dessen Oberfläche vorab durch chemisches Ätzen (Frosten) auf eine mittlere Rautiefe Rₐ von 2 µm eingestellt worden ist.

Auf dem Quarzglas-Flansch bildet sich dadurch eine gleichmäßige, geschlossene Schlicker-Schicht mit einer Dicke von etwa 0,35 mm. Diese Schlicker-Schicht wird zunächst ca. 5 Stunden bei Raumtemperatur und anschließend mittels eines IR-Strahlers an Luft getrocknet. Die getrocknete Schlicker-Schicht ist rissfrei, und sie hat eine mittlere Dicke von etwas weniger als 0,3 mm.

Der eingesetzte Schlicker ist bei diesem flächigen Auftrag auf dem Quarzglas-Flansch vorzugsweise dilatant. Die als "Dilatanz" bezeichnete rheologische Eigenschaft des Schlickers, zeigt sich darin, dass seine Viskosität mit der Schergeschwindigkeit zunimmt. Dies führt dazu, dass nach dem Wegfall der Scherkräfte - nach dem Auftragen des Schlickers als Schlicker-Schicht auf dem Quarzglas-Bauteil - die Viskosität abnimmt, was die Ausbildung einer gleichmäßig dicken Schlickerschicht erleichtert.

### Beispiel 2

Es wird ein Grundschlicker hergestellt, wie anhand Beispiel 1 beschrieben. Anstelle einer Zugabe von weiterer amorpher SiO₂-Körnung mit einer Korngröße von 5 µm wird dem homogenen, stabilen Grundschlicker weitere amorphe SiO₂-Körnung mit einer Korngröße um 40 µm zugemischt, bis ein Feststoffgehalt von 84 Gew.-% erreicht ist. Die Mischung wird 12 Stunden lang in einer Trommelmühle bei einer Drehzahl von 25 U/min homogenisiert. Der so erhaltene Schlicker hat einen Feststoffgehalt von 84 % und eine Dichte von 2,0 g/cm³. Die nach dem Vermahlen der Quarzglaskörnung erhaltenen SiO₂-Teilchen im Schlicker 14 zeigen eine Teilchengrößenverteilung, die durch einen D₅₀- Wert von etwa 14 µm und durch einen D₉₀-Wert von etwa 40 µm gekennzeichnet ist.

Der Schlicker kann neben den amorphen SiO₂-Teilchen auch Precursorkomponenten für die Bildung von SiO₂-Partikeln enthalten. Dabei handelt es sich um hydrolysierbare Siliziumverbindungen, wie sie bei Sol-Gel-Verfahren zur Herstellung von SiO₂ eingesetzt werden. Derartige Precursorkomponenten bilden infolge ihrer Hydrolyse molekulare Bindungen in der Schlicker-Schicht, führen zu einer Verfestigung und erleichtern dadurch das Sintern. Andererseits führen sie in hoher Konzentration jedoch auch zu einer hohen Trockenschwindung und können zu einer Rissbildung beitragen, was den Anteil an derartigen Precursorkomponenten im Schlicker begrenzt.

In den Schlicker wird einige Sekunden lang ein Ende eines Quarzglasrohres, dessen Oberfläche vorab durch chemisches Ätzen (Frosten) auf eine mittlere Rautiefe Rₐ von 2 µm eingestellt worden ist, etwa 3 cm tief eingetaucht. Am Ende des Quarzglasrohres bildet sich infolge des einmaligen, kurzen Eintauchvorgangs eine geschlossene Schlicker-Schicht mit einer Dicke von etwa 0,4 mm aus. Diese Schlicker-Schicht wird ca. 10 Minuten bei Raumtemperatur getrocknet. Der Tauch- und Trocknungsvorgang wird so oft wiederholt, bis sich am Ende des Quarzglasrohres eine Schlickermasse in Form einer wulstartigen Verdickung mit einer mittleren Dicke von ca. 15 mm ausgebildet hat. Diese Verdickung wird anschließend an Luft getrocknet.

Der eingesetzte Schlicker ist bei diesem zonenweisen Auftrag auf dem Quarzglasrohr vorzugsweise strukturviskos. Die als "Strukturviskosität" bezeichnete rheologische Eigenschaft des Schlickers, zeigt sich darin, dass seine Viskosität mit der Schergeschwindigkeit abnimmt. Dies führt dazu, dass nach dem Wegfall der Scherkräfte - nach dem Auftragen des Schlickers die Viskosität zunimmt, was die Ausbildung einer wulstartigen Schlickerschicht erleichtert.

### 2. Verglasen der Schlicker-Schicht

### Beispiel 3

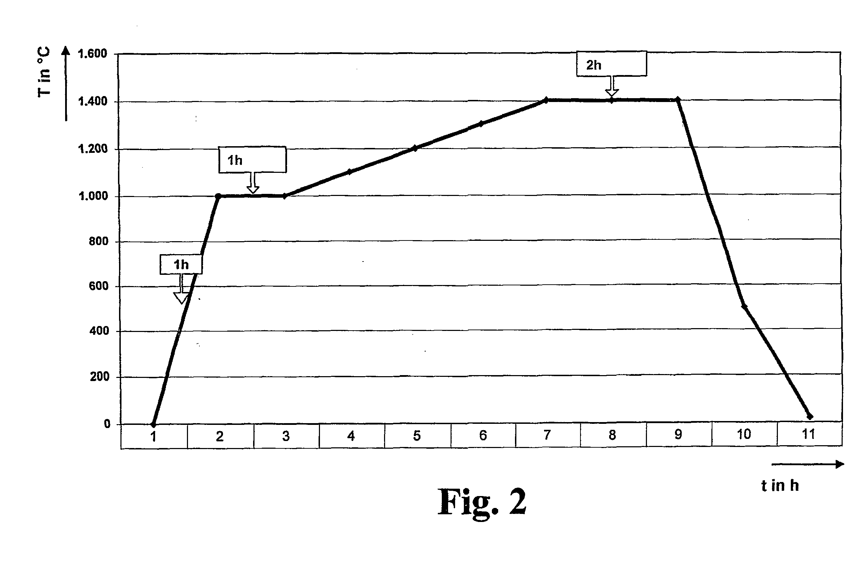

Die anhand von Beispiel 1 hergestellte und getrocknete Schlicker-Schicht auf dem Quarzglas-Flansch wird anschließend unter reiner Wasserstoffatmosphäre anhand des in Figur 2 gezeigten Heizprofils in einem Sinterofen verglast.

Das Heizprofil umfasst eine anfänglich steile Heizrampe, während der die Schlicker-Schicht von Raumtemperatur innerhalb von einer Stunde auf eine untere Heiztemperatur von 1000 °C erhitzt wird. Auf der unteren Heiztemperatur wird die Schlicker-Schicht eine Stunde lang gehalten und anschließend über eine zweite, flache Heizrampe über vier Stunden auf eine obere Heiztemperatur von 1400 °C erhitzt. Die Haltezeit bei der oberen Heiztemperatur beträgt im Ausführungsbeispiel zwei Stunden. Danach ist die Schlicker-Schicht vollständig verglast, transparent und blasenfrei.

Das anschließende Abkühlen erfolgt im Ofen unter Wasserstoff bis auf eine Temperatur von 500 °C mit einer geregelten Abkühlrate von 15°C/min und danach bei weiter geschlossenem Ofen durch freies Abkühlen.

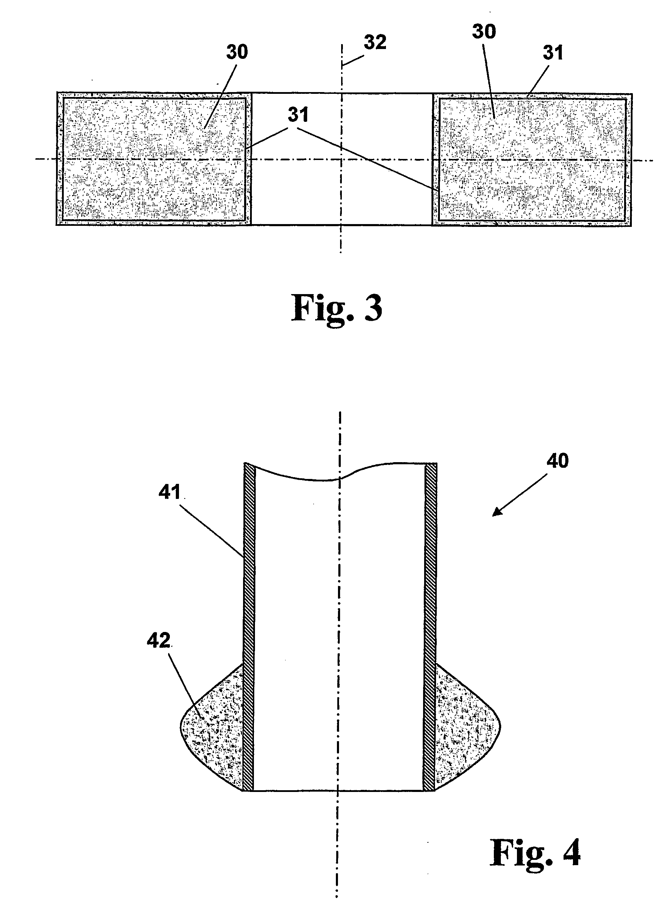

**Figur 3** zeigt den so beschichteten Quarzglas-Flansch schematisch anhand einer Schnittdarstellung. Der Flansch besteht aus einem ringförmigen Basiskörper 30 aus transparentem Quarzglas, der allseitig von einer rissfreien und transparenten SiO₂-Schicht 31 umgeben ist, die aus Darstellungsgründen in der Figur 3 übertrieben dick eingezeichnet ist. Die Mittelachse ist mit der Bezugsziffer 32 bezeichnet.

Die SiO₂-Schicht 31 auf dem Quarzglas-Flansch-Basiskörper 30 hat eine mittlere Schichtdicke um 0,2 mm. Sie zeichnet sich durch eine Dichte aus, die derjenigen von Quarzglas entspricht, sowie durch hohe Temperaturwechselbeständigkeit. Infolge ihrer Schlussbehandlung im Sinterofen zeigt sie eine rissfreie Oberflächen mit einer mittleren "natürlichen" Oberflächenrauigkeit (Rₐ) von etwa 1,2 µm, die sich ausschließlich - das heißt, ohne weitere Nachbearbeitung - infolge ihrer Herstellung unter Einsatz eines SiO₂-Körnung enthaltenden Schlickers ergibt. An der Oberfläche haften Materialschichten besonders gut, so dass sich eine Verlängerung der Reinigungszyklen gegenüber bekannten Quarzglasflanschen und damit eine Verlängerung der Lebensdauer ergibt.

### Beispiel 4

Auf dem Quarzglas-Flansch wird eine gleichmäßige, geschlossene Schlicker-Schicht mit einer Dicke von etwa 0,35 mm ausgebildet und getrocknet wie oben anhand Beispiel 1 beschrieben. Die Schlicker-Schicht wird anschließend mittels eines CO₂-Lasers verglast, wobei der Laserstrahldurchmesser mittels einer Optik auf etwa 5 mm aufgeweitet wurde, und der Laserstrahl mit einer Translationsgeschwindigkeit von 500 mm/min rasterförmig über die zu verglasende Abstand geführt wurde. Der Abstand zwischen Laseraustritt und Oberfläche wurde konstant auf 300 mm gehalten.

Es wird eine rissfreie und transparente SiO₂-Schicht erhalten, die sich durch einen besonders geringen Blasengehalt auszeichnet und deren Merkmale und Qualität ansonsten der oben anhand Figur 3 beschriebenen Schicht 31 entsprechen.

### Beispiel 5

Die anhand von Beispiel 2 hergestellte und getrocknete wulstartige verdickte Schlicker-Schicht am Ende des Quarzglasrohres wird anschließend mittels eines Knallgasbrenners verglast. Hierzu wird die Verdickung solange erhitzt, bis eine vollkommen transparente, flammenpolierte und dichte Oberfläche erhalten wird.

**Figur 4** zeigt einen Ausschnitt des so erhaltenen Quarzglas-Halbzeugs 40 anhand einer Schnittdarstellung. Das Halbzeug 40 dient zur Herstellung eines Kugelschliff teils aus Quarzglas. Hierzu ist ein Ende des Quarzglasrohres 41, das einen Außendurchmesser von 25 mm und eine Wandstärke von 2 mm aufweist, mit einer verglasten Verdickung 42 aus SiO₂ eine maximalen Dicke von 15 mm versehen, der wie oben beschrieben unter Einsatz eines SiO₂-Schlickers hergestellt worden ist. Die Verdickung 42 wird abschließend mechanisch bearbeitet und flammenpoliert. Er zeichnet sich durch Rissfreiheit sowie eine hohe Dichte aus, die derjenigen von Quarzglas entspricht. Beispiel 6

In einem weiteren Ausführungsbeispiel wird eine Schlicker-Schicht auf einem Stab aus transparentem, synthetisch hergestellten Quarzglas mit einem Hydroxylgruppengehalt von 250 Gew.-ppm durch Eintauchen erzeugt und anschließend getrocknet, wie in Beispiel 1 beschrieben. Nach dem Trocknen liegt die Dicke der Schlicker-Schicht bei 0,3 mm. Das Verglasen erfolgt in einem Ofen unter Luft, wobei das Heizprofil dem entspricht, wie es in Figur 2 dargestellt und oben anhand Beispiel 3 näher erläutert ist, jedoch mit dem Unterschied, dass die Haltezeit von zwei Stunden bei der Maximaltemperatur von 1400 °C entfällt. Das Abkühlen beginnt unmittelbar nachdem diese Temperatur erreicht ist.

Die so erhaltene, verglaste SiO₂-Glasmasse ist überraschenderweise vollkommen transparent. und sie weist eine Dicke von im Mittel 0,2 mm und eine mittlere Rauigkeit Rₐ von 1,2 µm auf.

### Beispiel 7

Die anhand Beispiel 6 erzeugte, getrocknete Schlicker-Schicht auf dem Quarzglasstab wird zum Verglasen in einen Sinterofen eingebracht und dort an Luft verglast.

Das Heizprofil entspricht demjenigen wie es in Figur 2 dargestellt und oben anhand Beispiel 3 näher erläutert ist, mit dem Unterschied, dass die Maximaltemperatur nicht 1400 °C, sondern lediglich 1050 °C beträgt. Bei dieser Temperatur wird der beschichtete Quarzglasstab 2 Stunden gehalten und dann abgekühlt.

Durch diese Temperaturbehandlung wird die Schlicker-Schicht zwar vollständig gesintert und verfestigt, die resultierende SiO₂-Glasmasse zeigt eine hohe Dichte von etwa 2,15 g/cm³, ist jedoch im Wesentlichen noch opak. Die Opazität zeigt sich dadurch, dass die direkte spektrale Transmission im Wellenlängenbereich zwischen 190 nm und 2650 nm unterhalb von 10 % liegt.

### Beispiel 8

Es wird eine Ausgangskörnung hergestellt, die aus 95 Gew.-% SiO₂ und 5 Gew.-% Y₂O₃ besteht. Hierzu wird reines Quarzglaspulver mit einem mittleren Teilchendurchmesser um 200 µm mit einem Yttriumoxidpulver einer mittleren Teilchengröße um 5 µm gemischt und das Pulvergemisch in einem elektrischem Ofen unter Vakuum in einer Grafitform geschmolzen. Das so erzeugte, mit Yttriumoxid dotierte Quarzglas wird zerkleinert und durch Nassvermahlen, wie anhand Beispiel 1 beschrieben, zu einem homogenen Grundschlicker mit einem Feststoffgehalt von 79 % verarbeitet. Durch Zugabe von weiterer mit Y₂O₃ dotierter Quarzglas-Körnung mit einer Korngröße um 5 µm wird ein Feststoffgehalt von 84 Gew.-% eingestellt.

Diese Mischung wird weiterverarbeitet wie anhand Beispiel 1 beschrieben, so dass die erhaltenen, dotierten SiO₂-Teilchen im Schlicker eine Teilchengrößenverteilung zeigen, die durch einen D₅₀- Wert von etwa 8 µm und durch einen D₉₀-Wert von etwa 40 µm gekennzeichnet ist.

Unter Verwendung dieses Schlickers wird eine gleichmäßige, geschlossene Schlicker-Schicht mit einer Dicke von etwa 0,35 mm auf einem Flansch erzeugt und getrocknet wie oben anhand Beispiel 1 beschrieben. Die so erhaltene Schlicker-Schicht wird anschließend zu einer transparenten, mit 5 Gew.-% Y₂O₃ dotierten Quarzglasschicht verglast. Sie zeichnet sich durch eine besonders hohe Resistenz gegen ätzende Gas aus.

### 3. Herstellen und Sintern eines durch Schlickergießen erhaltenen Grünkörpers

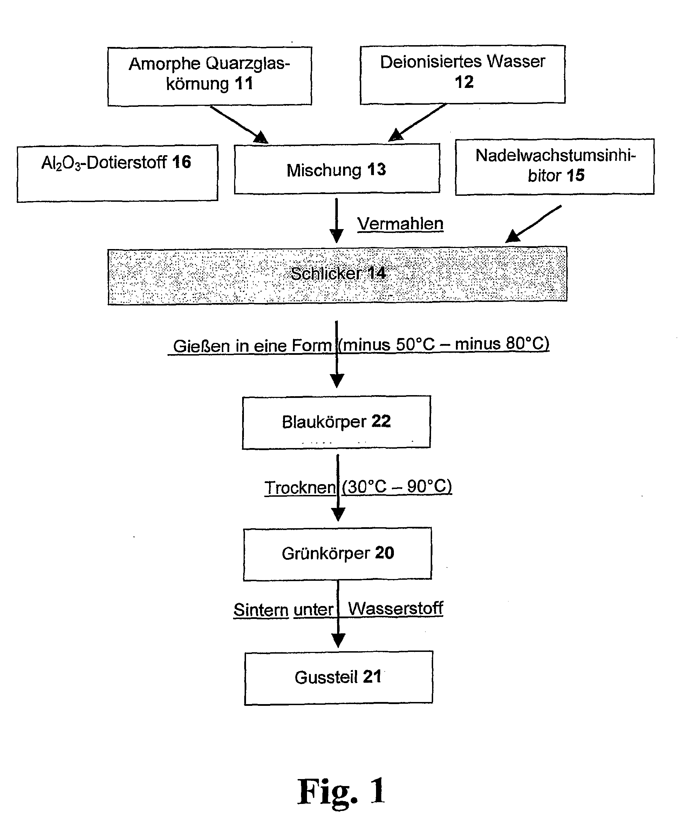

Nachfolgend wird anhand des Fließdiagramms von Figur 1 die Herstellung eine vollkommen verglasten und transparenten Quarzglaskörpers durch Sintern eines nach dem Schlickergießverfahren erhaltenen Grünkörpers näher erläutert.

Es wird eine Schlicker aus Quarzglaskörnung 11 und Wasser 12 hergestellt, wie oben anhand Beispiel 1 beschrieben. Zusätzlich wird dem Schlicker feinteiliges Al₂O₃-Pulver 16 in einer Menge von 500 Gew.-ppm (bezogen auf den SiO₂-Anteil) beigefügt. Diese Mischung 13 wird in einer Trommelmühle zu einem homogenen Schlicker 14 vermahlen, der einen Feststoffgehalt von 82 % aufweist. Die nach dem Vermahlen erhaltenen SiO₂-Teilchen im Schlicker 14 zeigen eine Teilchengrößenverteilung mit Teilchengrößen im Bereich zwischen 0,45 µm und 50 µm, wobei SiO₂-Teilchen mit Teilchengrößen im Bereich zwischen 1 µm und 10 µm den größten Volumenanteil ausmachen (D₅₀-Wert). Dieser Mischung werden außerdem 16 Gew.-% Glycerin (bezogen auf die verbleibende Flüssigphase), das als Nadelwachstumsinhibitor 15 wirkt, zugeführt und die Mischung 12 Stunden lang homogenisiert. Das Homogenisieren erfolgt in der Trommelmühle bei einer Drehzahl von 25 U/min.

Anschließend wird aus dem homogenen Schlicker 14 ein Grünkörper 20 erzeugt. Hierzu wird der Schlicker 14 in eine rohrförmige Membranform aus vakuumgeformten Silikon gegossen, die in Kohlendioxidschnee (Trockeneis) eingebettet ist. Dadurch wird ein rasches Einfrieren des Schlickers 14 zu einem Blaukörper 22 in Form eines Stabes mit einem Außendurchmesser von 10 mm bewirkt. Die Zugabe von Glycerin trägt zu einem homogenen Gefüge bei, das frei von Eisnadelstrukturen ist. Der schockgefrorene Blaukörper 22 wird der Membranform entnommen und unmittelbar - in gefrorenem Zustand - in einen auf 80 °C vorgewärmten Umlufttrockenschrank eingebracht und darin mehrere Stunden lang bei dieser Temperatur getrocknet. Durch das stetige Abdampfen und Abführen der Feuchtigkeit von der Oberfläche wird Rekondensation von Feuchtigkeit und ein nochmaliges oberflächliches Einfrieren, das mit Nadelkristallbildung und einer Störung des Grünkörpergefüges verbunden wäre, verhindert.

Der getrocknete Grünkörper 20 wird anschließend anhand des in Figur 2 dargestellten Heizprofils in einem Ofen unter reiner Wasserstoffatmosphäre gesintert, wobei die Haltezeit bei der oberen Heiztemperatur vier Stunden (anstelle von zwei Stunden) beträgt.

Auf diese Weise wird ein vollständiges Verglasen des Grünkörpers erreicht und ein stabförmiges Gussteil 21 mit einem Außendurchmesser von etwa 10 mm, bestehend aus transparentem Quarzglas erhalten.

## Patentansprüche

1. Verfahren zur Herstellung eines beschichteten Bauteils aus Quarzglas, indem die Oberfläche eines Basiskörpers (30, 41) aus Quarzglas mindestens teilweise mit einer SiO₂-Glasmasse (31, 42) belegt wird, die sich in ihren optischen, physikalischen oder chemischen Eigenschaften vom Quarzglas des Basiskörpers (30, 41) unterscheidet, **dadurch gekennzeichnet, dass** ein amorphe SiO₂-Teilchen enthaltender Schlicker erzeugt und auf der Oberfläche des Basiskörpers (30, 41) unter Bildung einer Schlicker-Schicht aufgebracht wird, die Schlicker-Schicht getrocknet und anschließend unter Bildung der SiO₂-Glasmasse (31, 42) verglast wird, wobei die amorphen SiO₂-Teilchen Teilchengrößen im Bereich bis maximal 500 µm aufweisen, wobei SiO₂-Teilchen mit Teilchengrößen im Bereich zwischen 1 µm und 50 µm den größten Volumenanteil ausmachen, und dass die Schlicker-Schicht durch Erhitzen auf eine Temperatur im Bereich zwischen 1000 °C und 1600 °C zu einer mindestens teilweise opaken und aus einem in Bezug auf den Basiskörper (30, 41) arteigenen Material bestehenden SiO₂-Glasmasse (31, 42) verglast wird.

2. Verfahren nach Anspruch 1, **dadurch gekennzeichnet, dass** die SiO₂-Teilchen Teilchengrößen im Bereich bis maximal 1 00 µm aufweisen.

3. Verfahren nach Anspruch 1 oder 2, **dadurch gekennzeichnet, dass** die SiO₂-Teilchen durch Nassmahlen von SiO₂-Ausgangskörnung hergestellt werden.

4. Verfahren nach einem der vorhergehenden Ansprüche, **dadurch gekennzeichnet, dass** das Verglasen der getrockneten Schlicker-Schicht durch Erhitzen auf eine Temperatur im Bereich zwischen 1100 °C und 1400 °C, erfolgt.

5. Verfahren nach einem der vorhergehenden Ansprüche, **dadurch gekennzeichnet, dass** das Verglasen der getrockneten Schlicker-Schicht in einer Wasserstoffatmosphäre erfolgt.

6. Verfahren nach einem der vorhergehenden Ansprüche **dadurch gekennzeichnet, dass** das Verglasen der getrockneten Schlicker-Schicht mittels einer Brennerflamme erfolgt.

7. Verfahren nach einem der vorhergehenden Ansprüche, **dadurch gekennzeichnet, dass** das Verglasen der getrockneten Schlicker-Schicht mittels eines Lasers erfolgt.

8. Verfahren nach einem der vorhergehenden Ansprüche, **dadurch gekennzeichnet, dass** die SiO₂-Glasmasse (31, 42) als bereichsweise Verdickung des Basiskörpers (30, 41) ausgebildet ist.

9. Verfahren nach einem der vorhergehenden Verfahrensansprüche, **dadurch gekennzeichnet, dass** dem Schlicker Dotierstoffe in Form von Yttrium, Aluminium, Stickstoff, Kohlenstoff oder deren Verbindungen hinzugefügt werden.

10. Quarzglas-Bauteil, umfassend einen Basiskörper (30, 41) aus Quarzglas, dessen Oberfläche mindestens teilweise mit einer SiO₂-Glasmasse belegt ist, die sich in ihren optischen, physikalischen oder chemischen Eigenschaften vom Quarzglas des Basiskörpers (30, 41) unterscheidet, **dadurch gekennzeichnet, dass** die Glasmasse (31, 42) aus einer amorphe SiO₂-Teilchen enthaltenden, getrockneten, verglasten Schlickermasse erzeugt ist, opak oder mindestens teilweise opak ist und in Bezug auf den Basiskörper (30, 41) aus arteigenem Material besteht.

11. Quarzglas-Bauteil nach Anspruch 10, **dadurch gekennzeichnet, dass** die SiO₂-Glasmasse (31, 42) mit einer rissfrei und werkzeugfrei geformten Oberfläche mit einer mittleren Oberflächenrauigkeit Rₐ von mindestens 0,5 µm ausgebildet ist.

12. Quarzglas-Bauteil nach Anspruch 11, **dadurch gekennzeichnet, dass** die Oberfläche der SiO₂-Glasmasse (31, 42) eine mittlere Oberflächenrauigkeit Rₐ von mindestens 1,0 µm aufweist.

13. Quarzglas-Bauteil nach einem der Ansprüche 10 bis 12, **dadurch gekennzeichnet, dass** die SiO₂-Glasmasse (42) einen verdickten Bereich des Basiskörpers (41) bildet.

14. Quarzglas-Bauteil nach einem der Ansprüche 10 bis 13, **dadurch gekennzeichnet, dass** die SiO₂-Glasmasse Dotierstoffe in Form von Yttrium, Aluminium, Stickstoff, Kohlenstoff oder deren Verbindungen enthält.

## Claims

1. A method for producing a coated component of quartz glass by covering the surface of a base body (30, 41) of quartz glass at least in part with an SiO₂ glass mass (31, 42) which differs in its optical, physical or chemical properties from the quartz glass of the base body (30, 41), **characterized in that** a slip containing amorphous SiO₂ particles is produced and applied to the surface of the base body (30, 41) so as to form a slip layer, and the slip layer is dried and subsequently vitrified so as to form the SiO₂ glass mass (31, 42), wherein the SiO₂ particles have particle sizes in a range of not more than 500 µm, and wherein a majority by volume of the SiO₂ particles have particle sizes in a range from 1 µm to 50 µm, and wherein the dried slip layer is vitrified by heating to a temperature ranging from 1000°C to 1600°C such that a SiO₂ glass mass is obtained which is at least partly opaque and which consists of material with the characteristics of a species with respect to the base body.

2. The method according to claim 1, **characterized in that** the SiO₂ particles have particle sizes in the range of not more than 100 µm.

3. The method according to claim 1 or 2, **characterized in that** the SiO₂ particles are produced by wet milling SiO₂ start grains.

4. The method according to any one of the preceding claims, **characterized in that** the dried slip layer is vitrified by heating the dried slip layer to a temperature ranging from 1100°C to 1400°C.

5. The method according to any one of the preceding claims, **characterized in that** the dried slip layer is vitrified in a hydrogen atmosphere.

6. The method according to any one of the preceding claims, **characterized in that** the dried slip layer is vitrified using a burner flame.

7. The method according to any one of the preceding claims, **characterized in that** the dried slip layer is vitrified using a laser.

8. The method according to any one of the preceding claims, **characterized in that** the SiO₂ glass mass (31, 42) is formed as a thickening in portions of the base body (30, 41).

9. The method according to any one of the preceding claims, **characterized in that** dopants chosen from the group consisting of yttrium, aluminum, nitrogen, carbon and compounds thereof are added to the slip.

10. A quartz glass component comprising a base body (30, 41) of quartz glass having a surface covered at least in part with an SiO₂ glass mass which differs in its optical, physical or chemical properties from quartz glass of the base body (30, 41), **characterized in that** the glass mass (31, 42) is prepared from a dried vitrified slip mass containing amorphous SiO₂ particles, wherein the SiO₂ glass mass (31, 42) is opaque or at least partly opaque and it consists of a material with the characteristics of the species with respect to the base body (30, 41).

11. The quartz glass component according to claim 10, **characterized in that** the SiO₂ glass mass (31, 42) is formed with a surface free from cracks and without any tools at an average surface roughness Rₐ of at least 0.5 µm.

12. The quartz glass component according to claim 11, **characterized in that** the surface of the SiO₂ glass mass (31, 42) has an average surface roughness Rₐ of at least 1.0 µm.

13. The quartz glass component according to any one of claims 10 to 12, **characterized in that** the SiO₂ glass mass (42) has a thickened portion of the base body (41).

14. The quartz glass component according to any one of claims 10 to 13, **characterized in that** the SiO₂ glass mass contains dopants chosen from the group consisting of yttrium, aluminum, nitrogen, carbon and compounds thereof.

## Revendications

1. Procédé de fabrication d'un composant revêtu en verre de quartz en recouvrant la surface d'un corps de base (30, 41) en verre de quartz, au moins en partie, d'une masse de verre de SiO₂ (31, 42) qui diffère par ses propriétés optiques, physiques ou chimiques, du verre de quartz du corps de base (30, 41), **caractérisé en ce qu'** une barbotine contenant des particules de SiO₂ amorphes est produite et appliquée à la surface du corps de base (30, 41) de manière à former une couche de barbotine, qui est séchée et ensuite vitrifiée de manière à former la masse de verre de SiO₂ (31, 42), les particules de SiO₂ ayant des particules ne dépassant pas plus de 500 µm, et dont la plus grand part de volume de particules de SiO₂ ont des tailles de particules dans une plage de 1 µm à 50 µm, et la couche de barbotine séchée étant ensuite vitrifiée par chauffage à une température allant de 1000 ° C à 1600 °C de manière à obtenir une masse de verre de SiO₂ qui est au moins partiellement opaque et qui se compose de matériau ayant les caractéristiques similaires à celle du corps de base.

2. Procédé selon la revendication 1, **caractérisé en ce que** les particules de SiO₂ ont des tailles de particules ne dépassant pas 100 µm.

3. Procédé selon la revendication 1 ou 2, **caractérisé en ce que** les particules de SiO₂ sont produites par broyage humide de grains de SiO₂ d'origine.

4. Procédé selon l'une quelconque des revendications précédentes, **caractérisé en ce que** la couche de barbotine séchée est vitrifiée par chauffage de la couche de barbotine séchée à une température allant de 1100°Cà1400°C.

5. Procédé selon l'une quelconque des revendications précédentes, **caractérisé en ce que** la couche de barbotine séchée est vitrifiée dans une atmosphère d'hydrogène.

6. Procédé selon l'une quelconque des revendications précédentes, **caractérisé en ce que** la couche de barbotine séchée est vitrifiée à l'aide d'une flamme de brûleur.

7. Procédé selon l'une quelconque des revendications précédentes, **caractérisé en ce que** la couche de barbotine séchée est vitrifiée à l'aide d'un laser.

8. Procédé selon l'une quelconque des revendications précédentes, **caractérisé en ce que** la masse de verre de SiO₂ (31, 42) est formée par un épaississement par zone du corps de base (30, 41).

9. Procédé selon l'une quelconque des revendications précédentes, **caractérisé en ce que** des dopants choisis parmi le groupe constitué par l'yttrium, l'aluminium, l'azote, le carbone et des composés de ceux-ci sont ajoutés à la barbotine.

10. Composant en verre de quartz comprenant un corps de base (30, 41) en verre de quartz ayant une surface recouverte au moins en partie, par une masse de verre SiO₂ dont les propriétés optiques, physiques ou chimiques sont différentes de celles du verre de quartz du corps de base (30, 41), **caractérisé en ce que** la masse de verre (31, 42) est produite à partir d'une masse de barbotine vitrifiée séchée contenant des particules de SiO₂ amorphes, la masse de verre de SiO₂ (31, 42) est opaque ou au moins partiellement opaque et se compose au moins partiellement d' un matériau ayant les caractéristiques similaires à celles du corps de base (30, 41).

11. Composant de verre de quartz selon la revendication 10, **caractérisé en ce que** la masse de verre de SiO₂ (31, 42) est formée avec une surface exempte de fissures et sans outil à une rugosité de surface moyenne Rₐ d'au moins 0,5 µm.

12. Composant de verre de quartz selon la revendication 11, **caractérisé en ce que** la surface de la masse de verre de SiO₂ (31, 42) a une rugosité de surface moyenne Rₐ d'au moins1,0 µm.

13. Composant de verre de quartz selon l'une quelconque des revendications 10 à 12, **caractérisé en ce que** la masse de verre de SiO₂ (42) forme une partie épaissie du corps de base (41).

14. Composant de verre de quartz selon l'une quelconque des revendications 10 à 13, **caractérisé en ce que** la masse de verre de SiO₂ contient des dopants choisis dans le groupe constitué par l'yttrium, l'aluminium, l'azote, le carbone et leurs composés.
